# FASCICULE DE BREVET EUROPEEN

(11) **EP 3 450 162 B1**
(45) Date de publication et mention de la délivrance du brevet: **29.12.2021**
(21) Numéro de dépôt: 18191550.5
(22) Date de dépôt: 29.08.2018
(51) Int. Cl.: B32B 27/12, B32B 5/02, B32B 7/12, B32B 27/30, B32B 27/40, B64B 1/14, B32B 33/00

(54) **MATÉRIAU MULTICOUCHE POUR UNE COQUE DE BALLON D'AÉROSTAT**
MEHRSCHICHTENMATERIAL FÜR EINE BALLONHÜLLE EINES LUFTSCHIFFS
MULTILAYER MATERIAL FOR A LIGHTER-THAN-AIR BALLOON SHELL

(30) Priorité: 30.08.2017 FR 1757987
(43) Date de publication de la demande: 06.03.2019
(73) Titulaire: Porcher Industries, 38300 Badinières (FR)
(72) Inventeur: VERAN, Stéphane, 73100 Aix les Bains (FR)
(74) Mandataire: Lavoix

(56) Documents cités:
- WO-A1-2007/038097
- US-A- 5 688 841
- US-A1- 2006 084 336

## Description

La présente invention concerne un matériau multicouche, pour la réalisation d'une coque de ballon d'aérostat enfermant un gaz porteur, un aérostat comprenant un ballon comprenant une coque enfermant un gaz porteur, ainsi qu'une utilisation d'une composition pour former une couche de dissipation de charges électriques d'un tel matériau multicouche.

US 2006/084336 A1 décrit un matériau laminé flexible pour enfermer un gaz d'aérostat, avec une couche de cœur incluant un tissu à haute résistance pour la reprise des contraintes, des couches de polyuréthane pour faire barrière au gaz, ainsi que diverses autres couches, notamment pour bloquer les rayons ultra-violets. Ce matériau laminé semble inadapté pour un gaz réactif, par exemple combustible ou explosif, tel que le dihydrogène. En effet, il n'est pas exclu que des charges électrostatiques s'accumulent sur la face du matériau laminé qui est en contact avec le gaz, ce qui pourrait donner lieu à la formation d'une étincelle susceptible d'initier une combustion du gaz.

Sans lien avec les aérostats, US 5 688 841 A décrit un film polyimide aromatique antistatique, contenant entre 14 et 50% en poids de particules de silice électriquement conductrices, revêtues d'une couche d'oxyde d'étain contenant de l'antimoine.

WO 2007/038097 A1 décrit un matériau laminé pour enfermer un gaz d'aérostat, comprenant une couche de tissu mono-filament, une couche de film polymérique adjacente à la couche de tissu, ainsi qu'une couche d'enduction métallisée adjacente à la couche de film polymérique. La couche de tissu mono-filament est interposée entre le gaz et la couche d'enduction métallisée. La couche d'enduction métallisée comprend par exemple des métaux tels que de l'argent ou de l'aluminium, pour empêcher une transmittance de radiations solaires et ainsi réguler la température de l'aérostat. Le document précise que la couche métallisée sert également à dissiper des charges locales, à réduire la perméabilité du matériau à l'hélium et à réduire les dégâts causés par la foudre.

La résistance de couche de la couche métallisée étant trop faible, elle rend l'aérostat sensible aux ondes électromagnétiques, de sorte à être facilement détectable par un radar et à pouvoir être échauffé par l'application d'ondes électromagnétiques. Pour certaines applications, la mise en œuvre d'une couche métallisée n'est donc pas souhaitable.

L'invention vise donc à résoudre les inconvénients susmentionnés de l'art antérieur en proposant un nouveau matériau multicouche, qui convient particulièrement à la réalisation d'une coque de ballon d'aérostat enfermant un gaz porteur réactif tout en étant peu sensible ou insensible aux ondes électromagnétiques.

L'invention a pour objet un matériau multicouche, pour la réalisation d'une coque de ballon d'aérostat, la coque enfermant un gaz porteur, le matériau multicouche comprenant au moins les couches suivantes :
- une couche structurelle, qui comprend un tissu de structure ; et
- une couche d'étanchéité au gaz porteur ;

Ces couches sont réparties entre une face externe de la coque et une face interne de la coque, la face interne étant destinée à être en contact avec le gaz porteur lorsque ce dernier est enfermé dans la coque.

Selon l'invention, le matériau multicouche comprend en outre une couche de dissipation de charges électriques, laquelle forme la face interne et laquelle présente une résistance de couche comprise entre 10⁴ et 10⁸ Ohm par Carré.

Grâce à l'invention, la couche de dissipation est prévue au niveau de la face interne, de façon à être située au contact du gaz porteur lorsque le matériau multicouche forme une coque de ballon d'aérostat. Ainsi, l'accumulation de charges au contact du gaz porteur est empêchée ou au moins limitée, ce qui évite la formation d'étincelles et autorise l'emploi d'un gaz porteur réactif tel que du dihydrogène. Par ailleurs, la résistance de couche de la couche de dissipation est suffisamment élevée pour rendre le matériau multicouche peu sensible ou insensible aux ondes électromagnétiques émises à partir de la face externe.

Afin d'obtenir des effets et avantages supplémentaires, l'invention comprend, de façon optionnelle, tout ou partie des caractéristiques suivantes :
- La couche de dissipation est enduite et comprend : un additif de dissipation, qui se présente sous la forme d'une poudre de particules de dissipation de charges électriques ; et un liant d'enduction, dans lequel la poudre de particules est préférentiellement dispersée.
- La proportion d'additif de dissipation est comprise entre 30 et 70% en masse de la couche de dissipation enduite.
- Au moins la majorité des particules de la poudre de particules formant l'additif de dissipation comprend un enrobage d'oxyde d'étain dopé à l'antimoine.
- Au moins la majorité des particules de la poudre de particules formant l'additif de dissipation comprend un cœur en silice creuse.
- Le liant d'enduction est à base d'uréthane.
- Le matériau multicouche comprend, en outre, entre la face externe et la couche structurelle, une couche de protection, à base d'un matériau qui constitue une barrière de protection contre les rayons ultraviolets, la couche de protection étant de préférence à base de polymère fluoré.
- La couche d'étanchéité s'étend entre la face interne et la couche structurelle et est de préférence à base de polyuréthane.
- Le tissu de structure est tissé avec du fil qui présente, à l'état non sollicité, une ténacité supérieure à 5 centiNewton par décitex.

L'invention a également pour objet un aérostat comprenant un ballon comprenant une coque enfermant un gaz porteur, qui est de préférence un gaz porteur réactif, la coque comprenant un matériau multicouche conforme à ce qui précède.

L'invention a également pour objet une utilisation d'une composition pour former une couche de dissipation de charges électriques d'un matériau multicouche conforme à ce qui précède, pour la réalisation d'une coque de ballon d'aérostat, la coque enfermant un gaz porteur, de préférence un gaz porteur réactif, la composition étant une composition d'enduction qui, une fois enduite, présentant une résistance de couche comprise entre 10⁴ et 10⁸ Ohm par carré.

L'invention sera mieux comprise à la lecture de la description qui suit, donnée à titre d'exemple non limitatif, et faisant référence aux dessins annexés parmi lesquels :
- la figure 1 est une vue schématique d'un aérostat comprenant un matériau multicouche conforme à l'invention ; et
- la figure 2 est une vue en coupe transversale schématique du matériau multicouche de la figure 1.

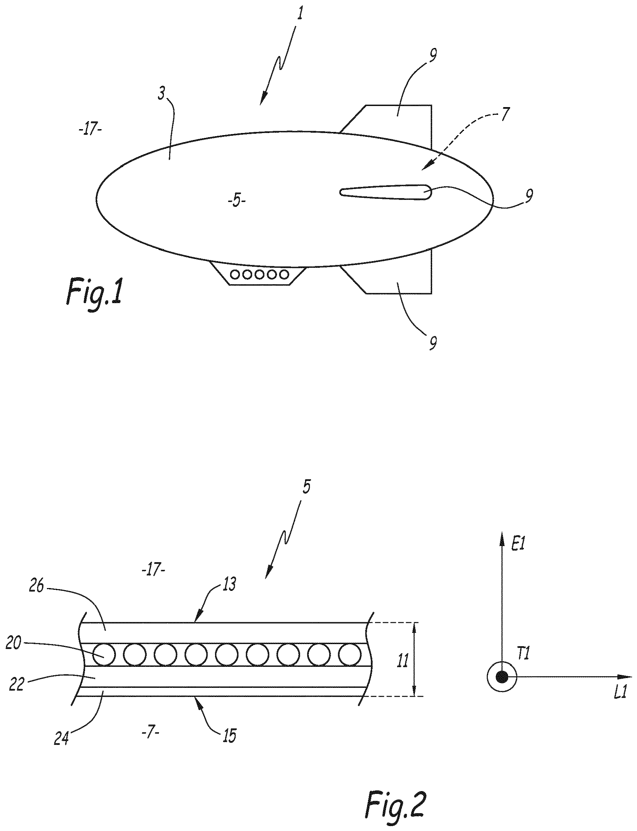

La figure 1 représente un aérostat 1, c'est-à-dire un aéronef plus léger que l'air. L'aérostat 1 se présente sous la forme d'un dirigeable. Alternativement, l'aérostat se présente sous la forme d'un ballon non dirigeable. L'aérostat est préférentiellement libre, mais peut alternativement être captif, c'est-à-dire relié au sol par un câble ou similaire. L'aérostat peut accueillir des passages ou non, selon l'application.

Quel que soit son mode de réalisation, l'aérostat 1 comprend un ballon 3, comprenant lui-même une coque 5. Le ballon 3 comprend optionnellement des ailettes 9 ou tout autre moyen de guidage, sustentation, ou réglage de l'orientation de l'aérostat 1. En fonction de l'application, on prévoit que le ballon 3 est souple, semi-rigide ou rigide.

La coque 5 est une paroi qui forme une enceinte fermée, pour enfermer un gaz porteur 7, qui sert à sustenter l'aérostat 1. Ce gaz porteur 7 est préférentiellement un gaz réactif, c'est-à-dire non-neutre, combustible ou explosif, tel que du dihydrogène, de l'hydrogène, du gaz de houille, ou un mélange comprenant un ou plusieurs des gaz susmentionnés. L'utilisation d'un gaz réactif présente un avantage considérable, dans la mesure où certains gaz réactifs présentent une densité particulièrement faible, notamment le dihydrogène, de façon à fournir une sustentation de valeur particulièrement élevée. La coque 5 est néanmoins apte à contenir un gaz neutre tel que de l'hélium, ou un mélange comprenant un tel gaz neutre.

La coque 5 comprend un matériau multicouche 11, particulièrement visible sur la figure 2. L'échelle de la figure 2 est volontairement déformée afin de bien illustrer les différentes couches du matériau 11. La coque 5 comprend une face externe 13 et une face interne 15, avantageusement formées par le matériau 11. La face externe 13 est préférentiellement prévue pour être en contact, sur toute sa surface ou sur l'essentiel de sa surface, avec l'air extérieur 17 dans lequel baigne l'aérostat 1. La face interne 15 est prévue pour être en contact, sur toute sa surface ou sur l'essentiel de sa surface, avec le gaz porteur 7 contenu à l'intérieur de la coque 5. Le matériau 11 présente avantageusement une certaine souplesse, de façon que la coque 5 qu'il forme puisse être gonflée par le gaz 7.

Le matériau multicouche 11 comprend plusieurs couches réparties entre la face interne 15 et la face externe 13, décrites dans ce qui suit. Les différentes couches mentionnées dans le présent document sont préférentiellement distinctes les unes des autres. Comme illustré sur la figure 2, les couches sont réparties selon une direction d'épaisseur E1, dirigé de la face interne 15 à la face externe 13, perpendiculairement à ces faces. Les différentes couches du matériau 11 et les faces 13 et 15 s'étendent quant à elles selon une direction longitudinale L1 et une direction transversale T1, perpendiculaires entre elles et à la direction E1.

Dans le présent exemple, on considère par commodité que le matériau 11 est à plat en s'étendant dans un plan défini par les directions L1 et T1. On comprend que le matériau 11 est susceptible de présenter en pratique une certaine courbure autour des axes portés par la direction T1 et/ou la direction L1, afin de former une coque 5 de ballon 3 arrondie, par exemple sphérique ou ovoïde.

Le matériau 11 comprend une couche structurelle 20, formée par un tissu de structure, pour conférer une résistance mécanique à la coque 5 face aux contraintes s'appliquant sur celle-ci. Par tissu de structure, on entend préférentiellement un textile tissé, par exemple formé d'une pluralité de fils de chaîne dans la direction L1, et d'une pluralité de fils de trame dans la direction T1, liés les uns aux autres par tissage. En particulier, la couche structurelle 20 confère une résistance en traction au matériau 11, dans les directions d'un plan formé par les directions T1 et L1. De préférence, le tissu de structure est tissé avec du fil qui présente, à l'état non sollicité, une ténacité supérieure à 5 cN/dtex, de préférence supérieure ou égale à 7 cN/dtex (centiNewton par décitex). Par exemple, le tissu est à base de fibres de polyester haute ténacité, dont la ténacité est supérieure à 7 cN/dtex. De préférence, le tissu est à base de fibres de Vectran (TM), c'est-à-dire à base de polymère à cristaux liquides, de ténacité supérieure à 20 cN/dtex. On prévoit ainsi que le tissu de la couche 20 du matériau 11 est particulièrement léger et résistant, ce qui est adapté au domaine d'application des aérostats. Par ténacité, on entend une grandeur traduisant la résistance du tissu à une contrainte de traction exprimée en tant que force, exprimée en centiNewtons, par unité de densité linéaire, exprimée en décitex, alors que le tissu n'est pas sous contrainte. En d'autres termes, la ténacité représente la résistance du fil en fonction de sa densité. La ténacité pourrait également être exprimée en gramme par denier (g/den). De préférence, la couche 20 comprend seulement le tissu susmentionné.

Dans un exemple de réalisation préféré, le tissu de la couche 20 est un textile tissé qui présente tout ou partie des caractéristiques suivantes :
- contexture de 18x18 fils/cm ;
- densité du tissu de la couche 20 est comprise entre 50 et 200 g/m² (grammes par mètre carré), de préférence environ 105 g/m² ;
- résistance à la rupture supérieure à 140 daN/5 cm.

Dans cet exemple, le fil du tissu de la couche 20 présente avantageusement tout ou partie des caractéristiques suivantes :
- fil en polyester haute ténacité ;
- 48 filaments par fil ;
- 280 dtex.

Un exemple de fil comprenant toutes les caractéristiques susmentionnées est commercialisé sous la référence Diolen^{®} 61ST par PHP Fibers GmbH.

Le matériau 11 comprend également une couche 22 d'étanchéité au gaz porteur 7. La couche d'étanchéité 22 est avantageusement située entre la face interne 15 et la couche structurelle 20, ce qui facilite l'application d'une couche 24 décrite dans ce qui suit. On pourrait alternativement prévoir que la couche d'étanchéité 22 est comprise entre la couche structurelle 20 et la face externe 13. La couche d'étanchéité 22 a pour fonction d'empêcher, ou de limiter, un transfert du gaz 7 ou de l'air 17 au travers du matériau 11, selon un axe parallèle à la direction E1. De préférence, la couche d'étanchéité 22 se présente sous la forme d'un film polymère. De préférence, la couche d'étanchéité 22 est à base de polyuréthane, qui constitue une barrière efficace tout en étant particulièrement adapté à une fixation par contre-collage. Grâce à cette couche d'étanchéité 22, on obtient par exemple une étanchéité au gaz porteur 7 inférieure à 2L/m²/jour.

De préférence, l'épaisseur de la couche 22, mesurée parallèlement à la direction E1, est comprise entre 10 et 100 µm, de préférence environ 50 µm.

En fonction du tissu choisi pour la couche 20 et du matériau choisi pour la couche 22, on peut préférer que le matériau 11 comprenne une couche de protection 26. La couche 26 est avantageusement disposée entre la face externe 13 et la couche structurelle 20, comme illustré sur la figure 2. Dans le présent exemple, la couche de protection 26 forme la face externe 13. La couche de protection 26 a pour fonction principale de former une barrière de protection, pour protéger le matériau 11 et le gaz 7 des rayons solaires, en particulier les rayons ultraviolets, afin notamment de limiter un échauffement du matériau 11 et du gaz 7 sous l'effet de ces rayons, et/ou l'altération du tissu de la couche 20 par ces rayons. De préférence, on choisit un matériau de couleur claire et opaque. De façon préférentielle, on prévoit que la couche 26 est à base de polymère fluoré. Par exemple, ce polymère est du poly-fluorure de vinyle, parfois dénommé Tedlar^{®} ou PVF, particulièrement résistant aux rayons susmentionnés, tout en assurant la fonction de barrière de protection susmentionnée. Par exemple, on prévoit un film Tedlar^{®} commercialisé par Dupont^{™} sous la référence TWH10BS3.

On préfère que la couche 26 présente une couleur blanche de façon à ne pas chauffer de façon excessive sous l'effet du rayonnement solaire.

Quel que soit le matériau envisagé pour la couche 26, on prévoit avantageusement que la couche 26 se présente sous la forme d'un film.

Le film de la couche 26 est avantageusement fixé à la couche 20 par contre-collage.

La couche de protection 26 peut également avoir pour fonction de conférer une étanchéité à l'eau au matériau 11, afin de limiter ou empêcher une humidité provenant de l'air 17, par exemple en cas d'intempéries, de traverser la couche 26.

On prévoit avantageusement que le film de la couche 26 présente une épaisseur, mesurée parallèlement à la direction E1, comprise entre 5 et 75 µm, préférentiellement 25µm.

Pour le contre-collage, on prévoit avantageusement une colle comprenant un adhésif, par exemple à base de polyuréthane, ainsi qu'un solvant, par exemple à base de xylène.

Le contre-collage des couches 20 et 26 est avantageusement effectué par :
- application d'une couche de colle sur la couche 26, par exemple à la racle,
- séchage de la couche de colle dans un four afin d'évaporer son solvant,
- application de la couches 26 pourvue de la colle sur la couche 20,
- calandrage du complexe ainsi formé par les couches 20 et 26 et la colle, pour effectuer le collage.

On prévoit avantageusement que la couche 22 est thermoréactivable et contrecollée par calandrage.

De préférence, on prévoit, que la couche 22 du matériau 11 comprend une face thermoréactivable, tournée du côté de la couche 20, cette couche thermoréactivable présentant la propriété de se coller à la couche 20 sous l'action d'une étape de chauffage. Plus précisément, on prévoit que la couche 22 comporte deux films à base de polyuréthane, liés par exemple par coextrusion. L'une de ces couches est plus stable, par exemple en présentant un point de fusion plus élevé, par exemple environ 150°C, alors que l'autre est thermoréactivable, par exemple en présentant un point de fusion plus bas, par exemple environ 120°C. Le collage du film pour former la couche 20 est alors effectué par réactivation de la couche thermoréactivable, ce qui est obtenu par chauffage et calandrage.

En variante, on pourrait prévoir que la couche 22 du matériau 11 est rapportée contre la couche 20 de façon similaire à la couche 26, c'est-à-dire notamment en appliquant une couche de colle sur un film polyuréthane destiné à former la couche 22.

Le complexe formé par les couches 20, 22 et 26 contrecollées présente l'avantage d'être suffisamment souple et résistant pour l'application souhaitée.

En variante, pour certaines applications et en fonction des matériaux choisis pour les couches 20 et 22, le matériau 11 est dépourvu de couche 26.

Le matériau multicouche 11 comprend en outre une couche de dissipation 24 de charges électriques, laquelle forme la face interne 15 et est ainsi en contact avec le gaz 7, sur toute la face interne 15, ou sur l'essentiel de la surface de la face interne 15. Par « forme la face interne », on entend que la couche 24 est laissée libre du côté du gaz 7 de façon à ce que le gaz 7 s'étende au contact de cette couche 24.

De préférence, la couche 24 est formée par enduction d'une composition d'enduction sur le complexe formé par les couches 20, 22 et 26 contrecollées, du côté de la couche 22.

La composition d'enduction, tout comme la couche 24, comprend un additif de dissipation, lequel se présente sous la forme d'une poudre particules de dissipation de charges électrique, ou poudre électro-conductrice.

On prévoit avantageusement qu'au moins la majorité, de préférence la quasi-totalité ou la totalité, des particules de la poudre de particules comprend un enrobage d'oxyde d'étain dopé à l'antimoine (ATO). On prévoit avantageusement qu'au moins la majorité, de préférence la quasi-totalité ou la totalité, des particules de la poudre de particules comprend un cœur en silice creuse. Par exemple, l'additif de dissipation est une composition ZELEC^{®} 1610S commercialisée par Milliken ^{®}.

On préfère l'utilisation d'une telle poudre à l'utilisation de noir de carbone, dans la mesure où cette poudre permet l'obtention d'une couleur plus claire, par exemple grise ou blanche, alors que le noir de carbone présente une couleur noire : ainsi, la composition d'enduction est moins susceptible de chauffer sous l'effet d'un rayonnement solaire. Toutefois, du noir de carbone peut être utilisé en variante, pour certaines applications.

On préfère l'utilisation d'une telle poudre par rapport à l'utilisation d'une poudre métallique, dans la mesure où elle permet d'obtenir une valeur de résistance de couche mieux maîtrisée et plus élevée.

La composition d'enduction comprend en outre un liant d'enduction, dans lequel la poudre de particules est de préférence dispersée, c'est-à-dire mélangée ou disséminée, par exemple de façon à être régulièrement répartie dans le liant d'enduction.

On prévoit avantageusement que le liant d'enduction est à base d'uréthane, de façon à être compatible avec le polyuréthane de la couche 22. Par exemple, le liant d'enduction est de l'Impranil^{®} ELH-A.

Si on prévoit un autre matériau pour la couche 22, on choisit préférentiellement un liant d'enduction à base d'un matériau compatible et/ou identique.

On prévoit avantageusement que la proportion d'additif de dissipation est comprise entre 30 et 70 %, de préférence environ 50%, en masse de la couche de dissipation 24, lorsque celle-ci est enduite et sèche.

La composition d'enduction, avant son enduction, comprend avantageusement un solvant qui est évaporé lorsque la couche de dissipation 24 est formée par enduction de la composition d'enduction sur la face libre de la couche 22. Par exemple, on peut prévoir, un solvant à base de toluène. La composition d'enduction, avant enduction, comprend avantageusement, en masse de la composition :
- entre 10 et 20 %, de préférence environ 16 % d'additif de dissipation ;
- entre 40 et 60 %, de préférence environ 53 % de liant d'enduction ;
- entre 25 et 40%, de préférence environ 31 % de solvant.

L'enduction est préférentiellement effectuée à la racle, suivie d'une étape de séchage de la composition enduite, afin que le solvant s'évapore pour former la couche 24.

L'épaisseur de la couche de dissipation 24 est préférentiellement comprise entre 5 et 20 µm, par exemple environ 10 µm.

La couche 24 présente une résistance de couche comprise entre 10⁴ et 10⁸ Ω/□ (Ohm par Carré). Une telle plage de résistance de couche confère à la couche 24 une fonction de dissipation statique, par opposition à une fonction antistatique, qui serait obtenue pour des valeurs supérieures à 10⁸ Ω/□, ou à une fonction conductrice, qui serait obtenue pour des valeurs inférieures à 10⁴ Ω/□. On préfère que la résistance de couche de la couche 24 soit, en pratique, proche de 10⁶ Ω/□.

Par ailleurs, on prévoit avantageusement que, au niveau des couches 20, 22 et 26, et au niveau de la face externe 13, le matériau 11 est électriquement isolant. De préférence, la résistance de couche du matériau 11 au niveau de la face externe 13 est supérieure à 10⁸ Ω/□, voire supérieure à 10¹⁰ Ω/□. Cela peut être obtenu par l'emploi des matériaux susmentionnés pour la couche 26.

En variante, on peut prévoir au contraire d'enduire la couche 26 avec une composition d'enduction similaire ou identique à celle de la couche 24, de façon à former une deuxième couche de dissipation formant la face externe 13. Dans ce cas, on obtient une résistance de couche similaire pour la face externe 13 et pour la face interne 15, alors que le matériau 11 présente, à cœur, une résistance plus élevée.

Par « résistance de couche », on entend une mesure de résistance d'une couche ou d'une feuille fine, qui est prévue pour être uniforme en épaisseur, pour le moins de façon nominale. La résistance de couche est parfois appelée « résistance de surface ». La résistance de couche est par exemple mesurée à l'aide de la méthode dite « des quatre pointes ». L'unité « Ω/□ » pourrait également être notée « Ω/sq », « Ω.m²/m » ou « Ω ».

De préférence, les valeurs de résistance de couche données ci-dessus sont mesurées alors que le matériau 11 est à une température d'environ 23°C, à 1°C près, avec une hygrométrie d'environ 25 % HR, à 5 % HR près. De préférence, les valeurs de résistance de couche données ci-dessus sont mesurées conformément à la norme française NF EN 1149-1 de janvier 2007.

Le matériau 11 présente avantageusement une densité comprise entre 150 et 300 g/m², par exemple d'environ 220 g/m².

De préférence, chacune des couches 20, 22, 24 et 26, en particulier la couche 24 présente une épaisseur nominale, mesurée parallèlement à la direction E1, sensiblement uniforme dans le plan défini par les directions L1 et T1. Néanmoins, en pratique, de légères variations d'épaisseur peuvent apparaître.

Le matériau 11 peut optionnellement comprendre une ou plusieurs autres couches que les couches susmentionnées. De préférence, le matériau 11 comprend seulement les couches 20, 22, 24 et 26 susmentionnées, ou seulement les couches 20, 22 et 24 susmentionnées, ainsi que la colle nécessaire au contre-collage, aucune autre couche n'étant prévue entre les faces 13 et 15.

De manière générale, par « X est à base de Y », on entend que l'élément X concerné comprend essentiellement l'élément Y, et que optionnellement, l'élément X comprend en outre un ou plusieurs autres éléments dans une proportion inférieure ou négligeable par rapport à la proportion de l'élément Y. Par « X comprend essentiellement Y », on entend que l'élément X comprend au moins en majorité, sinon en quasi-totalité, l'élément Y, et que l'élément X comprend optionnellement en outre un ou plusieurs autres éléments dans une proportion négligeable par rapport à la proportion de l'élément Y.

## Revendications

1. Matériau multicouche (11), pour la réalisation d'une coque (5) de ballon (3) d'aérostat (1), la coque (5) enfermant un gaz porteur (7), le matériau multicouche (11) comprenant au moins les couches suivantes :
- une couche structurelle (20), qui comprend un tissu de structure ; et
- une couche d'étanchéité (22) au gaz porteur (7) ;
ces couches étant réparties entre une face externe (13) de la coque (5) et une face interne (15) de la coque (5), la face interne (15) étant destinée à être en contact avec le gaz porteur (7) lorsque ce dernier est enfermé dans la coque (5),
**caractérisé en ce que** le matériau multicouche (11) comprend en outre une couche de dissipation (24) de charges électriques, laquelle forme la face interne (15) et laquelle présente une résistance de couche comprise entre 10⁴ et 10⁸ Ohm par Carré.

2. Matériau multicouche (11) selon la revendication 1, **caractérisé en ce que** la couche de dissipation (24) est enduite et comprend :
- un additif de dissipation, qui se présente sous la forme d'une poudre de particules de dissipation de charges électriques ; et
- un liant d'enduction, dans lequel la poudre de particules est dispersée.

3. Matériau multicouche (11) selon la revendication 2, **caractérisé en ce que** la proportion d'additif de dissipation est comprise entre 30 et 70% en masse de la couche de dissipation (24) enduite.

4. Matériau multicouche (11) selon l'une quelconque des revendications 2 ou 3, **caractérisé en ce qu'**au moins la majorité des particules de la poudre de particules formant l'additif de dissipation comprend un enrobage d'oxyde d'étain dopé à l'antimoine.

5. Matériau multicouche (11) selon l'une quelconque des revendications 2 à 4, **caractérisé en ce qu'**au moins la majorité des particules de la poudre de particules formant l'additif de dissipation comprend un cœur en silice creuse.

6. Matériau multicouche (11) selon l'une quelconque des revendications 2 à 5, **caractérisé en ce que** le liant d'enduction est à base d'uréthane.

7. Matériau multicouche (11) selon l'une quelconque des revendications précédentes, **caractérisé en ce que** le matériau multicouche (11) comprend, en outre, entre la face externe (13) et la couche structurelle (20), une couche de protection (26), à base d'un matériau qui constitue une barrière de protection contre les rayons ultraviolets.

8. Matériau multicouche (11) selon la revendication 7, **caractérisé en ce que** la couche de protection (26) est à base de polymère fluoré.

9. Matériau multicouche (11) selon l'une quelconque des revendications précédentes, **caractérisé en ce que** la couche d'étanchéité (22) s'étend entre la face interne (15) et la couche structurelle (20) et est de préférence à base de polyuréthane.

10. Matériau multicouche (11) selon l'une quelconque des revendications précédentes, **caractérisé en ce que** le tissu de structure est tissé avec du fil qui présente, à l'état non sollicité, une ténacité supérieure à 5 centiNewton par décitex.

11. Aérostat (1) comprenant un ballon (3) comprenant une coque (5) enfermant un gaz porteur (7), la coque (5) comprenant un matériau multicouche (11) conforme à l'une quelconque des revendications précédentes.

12. Aérostat selon la revendication 11, **caractérisé en ce que** le gaz porteur (7) est un gaz porteur réactif.

13. Utilisation d'une composition pour former une couche de dissipation (24) de charges électriques d'un matériau multicouche (11) conforme à l'une quelconque des revendications 1 à 10, pour la réalisation d'une coque (5) de ballon (3) d'aérostat (1), la coque (5) enfermant un gaz porteur (7), la composition étant une composition d'enduction qui, une fois enduite, présente une résistance de couche comprise entre 10⁴ et 10⁸ Ohm par carré.

14. Utilisation selon la revendication 13, **caractérisé en ce que** le gaz porteur (7) est un gaz porteur réactif.

## Patentansprüche

1. Mehrschichtiges Material (11) für die Herstellung einer Hülle (5) eines Ballons (3) eines Luftschiffs (1), wobei die Hülle (5) ein Trägergas (7) einschließt und das mehrschichtige Material (11) mindestens die folgenden Schichten umfasst:
- eine Strukturschicht (20), die ein Strukturgewebe umfasst; und
- eine Dichtungsschicht (22) gegenüber dem Trägergas (7);
wobei diese Schichten zwischen einer Außenseite (13) der Hülle (5) und einer Innenseite (15) der Hülle (5) verteilt sind, wobei die Innenseite (15) dazu bestimmt ist, mit dem Trägergas (7) in Kontakt zu sein, wenn dieses letztere in der Hülle (5) eingeschlossen ist,
**dadurch gekennzeichnet, dass** das mehrschichtige Material (11) ferner eine Ableitungsschicht (24) elektrischer Ladungen umfasst, die die Innenseite (15) bildet und die einen Schichtwiderstand zwischen 10⁴ und 10⁸ Ohm pro Quadratmeter umfasst.

2. Mehrschichtiges Material (11) nach Anspruch 1, **dadurch gekennzeichnet, dass** die Ableitungsschicht (24) beschichtet ist und Folgendes umfasst:
- ein Ableitungsadditiv, das in Form eines Partikelpulvers zum Ableiten elektrischer Ladungen vorliegt; und
- ein Beschichtungsbindemittel, in dem das Partikelpulver dispergiert ist.

3. Mehrschichtiges Material (11) nach Anspruch 2, **dadurch gekennzeichnet, dass** der Anteil des Ableitungsadditivs zwischen 30 und 70 Masseprozent der beschichteten Ableitungsschicht (24) liegt.

4. Mehrschichtiges Material (11) nach einem der Ansprüche 2 oder 3, **dadurch gekennzeichnet, dass** mindestens die Mehrheit der Partikel des Partikelpulvers, die das Ableitungsadditiv bilden, einen Überzug aus antimondotiertem Zinnoxid umfasst.

5. Mehrschichtiges Material (11) nach einem der Ansprüche 2 bis 4, **dadurch gekennzeichnet, dass** mindestens die Mehrheit der Partikel des Partikelpulvers, die das Ableitungsadditiv bilden, einen hohlen Siliciumdioxidkern umfassen.

6. Mehrschichtiges Material (11) nach einem der Ansprüche 2 bis 5, **dadurch gekennzeichnet, dass** das Beschichtungsbindemittel auf Urethanbasis ist.

7. Mehrschichtiges Material (11) nach einem der vorherigen Ansprüche, **dadurch gekennzeichnet, dass** das mehrschichtige Material (11) ferner zwischen der Außenseite (13) und der Strukturschicht (20) eine Schutzschicht (26) auf Basis eines Materials umfasst, das eine Schutzbarriere gegen ultraviolette Strahlen darstellt.

8. Mehrschichtiges Material (11) nach Anspruch 7, **dadurch gekennzeichnet, dass** die Schutzschicht (26) auf Fluorpolymerbasis ist.

9. Mehrschichtiges Material (11) nach einem der vorherigen Ansprüche, **dadurch gekennzeichnet, dass** sich die Dichtungsschicht (22) zwischen der Innenseite (15) und der Strukturschicht (20) erstreckt und vorzugsweise auf Polyurethanbasis ist.

10. Mehrschichtiges Material (11) nach einem der vorherigen Ansprüche, **dadurch gekennzeichnet, dass** das Strukturgewebe mit einem Garn gewebt ist, das in unbelastetem Zustand eine Festigkeit über 5 Centinewton pro Dezitex aufweist.

11. Luftschiff (1), umfassend einen Ballon (3), umfassend eine Hülle (5), die ein Trägergas (7) einschließt, wobei die Hülle (5) ein mehrschichtiges Material (11) nach einem der vorherigen Ansprüche umfasst.

12. Luftschiff nach Anspruch 11, **dadurch gekennzeichnet, dass** das Trägergas (7) ein reaktives Trägergas ist.

13. Verwendung einer Zusammensetzung zum Bilden einer Ableitungsschicht (24) elektrischer Ladungen aus einem mehrschichtigen Material (11) nach einem der Ansprüche 1 bis 10 zur Herstellung einer Hülle (5) eines Ballons (3) eines Luftschiffs (1), wobei die Hülle (5) ein Trägergas (7) einschließt und die Zusammensetzung eine Beschichtungszusammensetzung ist, die nach einer Beschichtung einen Schichtwiderstand zwischen 10⁴ und 10⁸ Ohm pro Quadratmeter aufweist.

14. Verwendung nach Anspruch 13, **dadurch gekennzeichnet, dass** das Trägergas (7) ein reaktives Trägergas ist.

## Claims

1. A multilayer material (11) for the production of a shell (5) of a balloon (3) of an aerostat (1), the shell (5) enclosing a carrier gas (7), the multilayer material (11) comprising at least the following layers:
- a structural layer (20), which comprises a structural fabric; and
- a sealing layer (22) to the carrier gas (7);
these layers being distributed between an external face (13) of the shell (5) and an internal face (15) of the shell (5), the internal face (15) being intended to be in contact with the carrier gas (7) when the latter is enclosed in the shell (5), **characterised in that** the multilayer material (11) furthermore comprises an electric charge dissipation layer (24), which forms the internal face (15) and which has a layer resistance of between 10⁴ and 10⁸ Ohm per square.

2. The multilayer material (11) according to claim 1, **characterised in that** the dissipation layer (24) is coated and comprises:
- a dissipative additive, which is in the form of a powder of electric charge dissipative particles; and
- a coating binder, in which the particle powder is dispersed.

3. The multilayer material (11) according to claim 2, **characterised in that** the proportion of dissipative additive is between 30 and 70% by mass of the coated dissipative layer (24).

4. The multilayer material (11) according to any one of claims 2 or 3, **characterised in that** at least the majority of the particles of the particle powder forming the dissipative additive comprise a coating of antimony-doped tin oxide.

5. The multilayer material (11) according to any one of claims 2 to 4, **characterised in that** at least the majority of the particles of the particle powder forming the dissipative additive comprise a hollow silica core.

6. The multilayer material (11) according to any one of claims 2 to 5, **characterised in that** the coating binder is urethane-based.

7. The multilayer material (11) according to any of the preceding claims, **characterised in that** the multilayer material (11) further comprises, between the outer face (13) and the structural layer (20), a protective layer (26), based on a material which constitutes a protective barrier against ultraviolet rays.

8. The multilayer material (11) according to claim 7, **characterised in that** the protective layer (26) is based on fluoropolymer.

9. The multilayer material (11) according to any of the preceding claims, **characterised in that** the sealing layer (22) extends between the inner face (15) and the structural layer (20) and is preferably polyurethane-based.

10. The multilayer material (11) according to any of the preceding claims, **characterised in that** the structural fabric is woven with yarn which has, in the unstressed state, a tenacity greater than 5 centiNewtons per decitex.

11. An aerostat (1) comprising a balloon (3) comprising a shell (5) enclosing a carrier gas (7), the shell (5) comprising a multi-layer material (11) according to any of the preceding claims.

12. The aerostat as claimed in claim 11, **characterised in that** the carrier gas (7) is a reactive carrier gas.

13. Use of a composition for forming an electrical charge dissipating layer (24) of a multilayer material (11) according to any one of claims 1 to 10, for the manufacture of a shell (5) of a balloon (3) of an aerostat (1), the shell (5) enclosing a carrier gas (7), the composition being a coating composition which, when coated, has a layer resistance of between 10⁴ and 10⁸ Ohm per square

14. Use according to claim 13, **characterised in that** the carrier gas (7) is a reactive carrier gas.
